# EUROPÄISCHE PATENTANMELDUNG

(11) **EP 3 041 007 A1**
(43) Veröffentlichungstag der Anmeldung: **06.07.2016**
(21) Anmeldenummer: 14195251.5
(22) Anmeldetag: 27.11.2014
(51) Int. Cl.: H01F 27/36, B60L 11/18, H01F 38/14

(54) **Abschirmung für ein kontaktloses Energieübertragungssystem mit verbesserter Kopplung und verbessertem Streufeld**

(71) Anmelder: Brusa Elektronik AG, 9466 Sennwald (CH)
(72) Erfinder: Die Erfindernennung liegt noch nicht vor
(74) Vertreter: Patentbüro Paul Rosenich AG

(57) **Zusammenfassung**

Die Erfindung betrifft eine Abschirmung (1a..1d) aus einem Material mit einer magnetischen Leitfähigkeit beziehungsweise Permeabilität von µr≥ 4, insbesondere aus Ferrit, für eine ringförmige Sendespule/Empfangsspule (10) eines kontaktlosen Energieübertragungssystems (12). Die Abschirmung (1a..1d) schliesst dabei einen Ringbereich (A) zwischen einem aussenliegenden grösseren Rechteck (B) und einem innenliegenden, kleineren Rechteck (C) wannenförmig ein. Im Bereich des aussenliegenden Rechtecks (B) weist die Abschirmung (1a..1d) auf zwei gegenüberliegenden Seiten flügelartige und insbesondere parallel zum Wannenboden (2) ausgerichtete Fortsätze (5) auf. Zudem wird ein Sender/Empfänger (9, 9a, 9b) mit einer solchen Abschirmung (1a..1d) und einer in den Ringbereich (A) eingebetteten Sendespule/Empfangsspule (10) angegeben. Schliesslich betrifft die Erfindung auch ein Energieübertragungssystem (12), mit einer solchen Abschirmung (1a..1d) / einem solchen Sender (9a) sowie einer in einem Kraftfahrzeug (14) eingebaute Empfangsspule (9b).

## Beschreibung

Die Erfindung betrifft eine Abschirmung aus einem Material mit einer magnetischen Leitfähigkeit beziehungsweise Permeabilität von µr≥ 4, insbesondere aus Ferrit, für eine ringförmige Sendespule/Empfangsspule eines kontaktlosen Energieübertragungssystems. Die Abschirmung schliesst einen Ringbereich zwischen einem aussenliegenden grösseren Rechteck und einem innenliegenden, kleineren Rechteck wannenförmig ein. Zudem betrifft die Erfindung einen Sender/Empfänger mit einer solchen Abschirmung und einer darin eingebetteten Sendespule/Empfangsspule. Schliesslich betrifft die Erfindung auch ein Energieübertragungssystem mit einem solchem Sender sowie einen in einem Kraftfahrzeug eingebauten Empfänger.

Kontaktlose Energieübertragungssysteme für elektrische Energie sind grundsätzlich bekannt. Dabei wird in einer Sendespule ein Magnetfeld erzeugt, das in einer gegenüberliegend angeordneten Empfangsspule einen Strom erzeugt, der entweder direkt zum Betrieb eines elektrischen Geräts oder aber zum Laden eines Akkumulators genutzt wird.

Generell werden eine möglichst gute Kopplung zwischen den beiden Spulen beziehungsweise ein geringes von der Sendespule emittiertes Streufeld angestrebt, um die Energie effizient übertragen zu können. Zudem soll ein solches System auch elektromagnetisch verträglich sein. Insbesondere betrifft dies den Ladevorgang von Elektrokraftfahrzeugen, der im Hinblick auf die auftretenden Leistungen besonders effizient sein sollte und von dem auch wegen der sich im Bereich von Kraftfahrzeugen aufhaltenden Menschen und Tieren nur eine geringe Gefahr ausgehen soll. Starke und weit streuende elektromagnetische Felder können nämlich ein Gesundheitsrisiko für Mensch und Tier darstellen.

Eine Aufgabe der Erfindung ist es daher, eine verbesserte Abschirmung, einen verbesserten Sender/Empfänger sowie ein verbessertes Energieübertragungssystem anzugeben. Insbesondere soll die Kopplung zwischen Sendespule und Empfangsspule verbessert werden (besonders bei horizontalem Versatz zwischen Sender und Empfänger) und es soll im Speziellen auch nur ein geringes Streufeld von der Sendespule ausgehen.

Die Aufgabe wird durch die Merkmale der unabhängigen Ansprüche gelöst. Vorteilhafte Weiterbildungen sind in den Figuren und in den abhängigen Patentansprüchen dargelegt.

Gemäss der Erfindung weist die Abschirmung im Bereich des aussenliegenden Rechtecks nur auf zwei gegenüberliegenden Seiten flügelartige und insbesondere parallel zum Wannenboden ausgerichtete Fortsätze auf.

Insbesondere kann der Ringbereich zwischen einem aussenliegenden grösseren Quadrat und einem innenliegenden, kleineren Quadrat angeordnet sein. Denkbar ist aber auch, dass das innenliegende und aussenliegende Rechteck ungleichseitig sind und dass die flügelartigen Fortsätze nur auf den längeren Seiten des aussenliegenden Rechtecks vorgesehen sind.

Gemäss der Erfindung umfasst der Sender/Empfänger eines Energieübertragungssystems eine Abschirmung der genannten Art und eine in der Wanne angeordnete Sendespule/Empfangsspule.

Gemäss der Erfindung umfasst ein Energieübertragungssystem einen Sender der oben genannten Art sowie einen in einem Kraftfahrzeug eingebauten Empfänger respektive ein Kraftfahrzeug mit einem darin eingebauten Empfänger.

Gemäss der Erfindung wird ein Sender/Empfänger der oben genannten Art schliesslich zur Ladung eines in einem Kraftfahrzeug angeordneten Akkumulators verwendet.

Durch die vorgeschlagenen Massnahmen wird einerseits die Flussdichte im Bereich der flügelartigen Fortsätze reduziert und andererseits die Kopplung zwischen Sendespule und Empfangsspule verbessert, und es geht auch nur ein geringes Streufeld von der Sendespule aus. Damit wird der Wirkungsgrad der Energieübertragung verbessert, was insbesondere für grosse zu übertragende Leistungen relevant ist, so wie sie beispielsweise beim Laden eines Elektrokraftfahrzeugs auftreten. Ein weiterer Aspekt ist auch das nur geringe von der Sendespule emittierte Streufeld, wodurch gesundheitliche Auswirkungen durch das elektromagnetische Feld vermieden oder wenigstens verringert werden können. Ein weiterer Vorteil besteht darin, dass nur geringe Wirbelströme in metallischen, im Magnetfeld liegenden Teilen induziert werden. Zuletzt kann ein horizontaler Versatz zwischen Sender und Empfänger gut ausgeglichen werden, das heisst ein horizontaler Versatz beeinflusst die Kopplung nur unwesentlich, insbesondere ein seitlicher Versatz quer zur Längsrichtung der flügelartigen Fortsätze.

Die Kopplung gibt generell das Verhältnis zwischen dem vom Sender ausgehenden magnetischen Fluss und dem durch den Empfänger gehenden magnetischen Fluss an und kann definitionsgemäss Werte zwischen 0 und 1 annehmen. Das Streufeld ist jener Teil des vom Sender emittierten magnetischen Feldes, der nicht durch die Empfangsspule geht.

Das vorgeschlagene kontaktlose Energieübertragungssystem umfasst insbesondere keine magnetischen Kerne, die bei der Energieübertragung einander berühren. Das heisst, zwischen der Sendespule und der Empfangsspule befindet sich während der Energieübertragung ein durchgehender Luftspalt beziehungsweise andere Stoffe mit einer Permeabilitätszahl µᵣ < 1,01. In Anwendungen zum Laden eines Elektrokraftfahrzeugs kann der Abstand zwischen Sender und Empfänger insbesondere zwischen 10 mm und 250 mm betragen.

In Anwendungen zum Laden eines Elektrokraftfahrzeugs ist für den Sender auch der Begriff "Ground Pad Module" und für den Empfänger der Begriff "Car Pad Module" gebräuchlich.

Weitere vorteilhafte Ausgestaltungen und Weiterbildungen der Erfindung ergeben sich aus den Unteransprüchen sowie aus der Beschreibung in Zusammenschau mit den Figuren.

Vorteilhaft ist es, wenn eine Wannenwand der Abschirmung auf jenen Seiten des aussenliegenden Quadrats, die keine Flügel aufweisen, beziehungsweise auf den kürzeren Seiten des aussenliegenden Rechtecks nach aussen geneigt ist. Im Speziellen ist es von Vorteil, wenn eine Wannenwand der Abschirmung nur auf jenen Seiten des aussenliegenden Quadrats nach aussen geneigt ist, die keine Flügel aufweisen, beziehungsweise nur auf den kürzeren Seiten des aussenliegenden Rechtecks. Dadurch werden die Kopplung und das Streufeld noch weiter verbessert.

Besonders vorteilhaft ist es in obigem Zusammenhang, wenn der Neigungswinkel zwischen der Wannenwand und der Ebene des aussenliegenden Rechtecks in einem Bereich von 10° bis 90° liegt und im Speziellen im Wesentlichen 45° beträgt. Die Angabe "im Wesentlichen" bedeutet im gegebenen Zusammenhang insbesondere eine Winkelabweichung von +/- 10°. Dadurch werden die Kopplung und das Streufeld ebenfalls weiter verbessert.

Günstig ist es weiterhin, wenn der Wannenboden im Bereich des inneren Rechtecks erhöht ist, insbesondere auf das Niveau der besagten flügelartigen Fortsätze. Insbesondere ist es dabei von Vorteil, wenn der erhöhte Wannenboden eine zentrale Ausnehmung aufweist. In einer weiteren vorteilhaften Ausgestaltung der Abschirmung ist die zentrale Ausnehmung kleiner als das innere Rechteck, und die Abschirmung weist im Bereich des innenliegenden Rechtecks flügelartige und insbesondere parallel zu den aussenliegenden Flügeln ausgerichtete Fortsätze auf. Auch durch diese Massnahmen werden die Kopplung und das Streufeld weiter verbessert. Durch die zentrale Ausnehmung kann überdies die Kühlung verbessert werden. Denkbar ist auch, im Bereich der Ausnehmung Verstärkungen anzubringen, um die mechanische Stabilität eines Senders/Empfängers zu verbessern. Beispielsweise kann im Bereich der Ausnehmung eine Stütze angeordnet sein.

Weitere Massnahmen zur Verbesserung der Kopplung und des Streufelds bestehen darin, dass die innenliegenden Flügel auf der längeren Seite des innenliegenden Rechtecks gleich weit zur Mitte auskragen wie die innenliegenden Flügel auf der kürzeren Seite des innenliegenden Rechtecks. Besonders vorteilhaft ist es aber, wenn die innenliegenden Flügel auf der längeren Seite des innenliegenden Rechtecks weiter zur Mitte hin auskragen wie die innenliegenden Flügel auf der kürzeren Seite des innenliegenden Rechtecks. Von Vorteil ist es darüber hinaus auch, wenn die innenliegenden Flügel gleich weit auskragen wie die aussenliegenden Flügel, insbesondere wenn die innenliegenden Flügel auf der längeren Seite des innenliegenden Rechtecks gleich weit auskragen wie die aussenliegenden Flügel auf der längeren Seite des aussenliegenden Rechtecks.

Generell ist es von Vorteil, wenn die längere Seite des aussenliegenden Rechtecks in einem Bereich von 400 mm bis inklusive 800 mm und/oder die kürzere Seite des aussenliegenden Rechtecks in einem Bereich von 200 mm bis inklusive 600 mm liegt. Dadurch eignet sich die Abschirmung von ihrer Dimension her gut für die Ladung eines Akkumulators in einem Kraftfahrzeug.

Generell ist es auch von Vorteil, wenn ein Flügel um 10 mm bis 100 mm über eine Wannenwand auskragt. In dieser Grössenordnung wirken die beschriebenen Massnahmen besonders gut.

Besonders vorteilhaft ist es auch, wenn die Abschirmung aus mehreren Bauteilen zusammengesetzt ist, deren Volumen jeweils in einem Bereich von 0.5 cm³ bis 200 cm³ liegt. Dadurch kann die Abschirmung auf einfache Weise hergestellt werden, da zum Beispiel Ferrit-Plättchen dieser Grössenordnung einerseits wenig bruchgefährdet sind, andererseits auch als Standardware leicht erhältlich sind. Insbesondere kann die Abschirmung auch aus mehreren Lagen der Bauteile/Ferrit-Plättchen aufgebaut sein, im Speziellen aus zwei Lagen. Dadurch kann beispielsweise der thermische Ausgleich innerhalb der Abschirmung verbessert werden.

Darüber hinaus ist es bei dem vorgestellten Energieübertragungssystem besonders vorteilhaft, wenn die aussenliegenden Flügel des Senders und die aussenliegenden Flügel des Empfängers im Betrieb im Wesentlichen parallel zueinander ausgerichtet sind. Dadurch ist die Kopplung zwischen Sender und Empfänger besonders gut. Im Speziellen betrifft dies Anordnungen, bei denen Sender und Empfänger relativ weit voneinander beabstandet sind, also zum Beispiel Energieübertragungssysteme für SUVs (Sports Utility Vehicles).

Besonders vorteilhaft ist es bei dem vorgestellten Energieübertragungssystem weiterhin, wenn die Längsseiten der Flügel des Empfängers quer zur Fahrtrichtung des Kraftfahrzeugs ausgerichtet sind. Dadurch wird die Kopplung noch weiter verbessert, insbesondere wenn eine bestimmte Relativposition zwischen Sender und Empfänger beim Ladevorgang nicht garantiert werden kann, sondern auch von einem Versatz zwischen Sender und Empfänger ausgegangen werden muss. Insbesondere ist es auch von Vorteil, wenn der Ringbereich des Empfängers in einem aussenliegenden Quadrat angeordnet ist und der Ringbereich des Senders in einem aussenliegenden, ungleichmässigen Rechteck. Dadurch kann der angesprochene Versatz besonders gut ausgeglichen werden.

An dieser Stelle wird angemerkt, dass sich die zu der Abschirmung offenbarten Varianten und die daraus resultierenden Vorteile gleichermassen auf den offenbarten Sender/Empfänger und das offenbarte Energieübertragungssystem beziehen und umgekehrt.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung beschrieben sind. Dabei können die in den Ansprüchen und in der Beschreibung erwähnten Merkmale jeweils einzeln für sich oder in beliebiger Kombination erfindungswesentlich sein.

Die Bezugszeichenliste ist Bestandteil der Offenbarung. Die Figuren werden zusammenhängend und übergreifend beschrieben. Gleiche Bezugszeichen bedeuten gleiche Bauteile, Bezugszeichen mit unterschiedlichen Indizes geben funktionsgleiche oder ähnliche Bauteile an.

Es zeigen dabei:
- Fig. 1: ein erstes Beispiel einer Abschirmung für eine ringförmige Sendespule/Empfangsspule in Schrägansicht;
- Fig. 2: eine Draufsicht auf die Abschirmung aus Fig. 1;
- Fig. 3: ähnlich wie Fig. 1, jedoch mit teilweise schrägen Wannenwänden;
- Fig. 4: ähnlich wie Fig. 3, jedoch mit innenliegenden flügelartigen Fortsätzen;
- Fig. 5: eine Draufsicht auf die Abschirmung aus Fig. 4;
- Fig. 6: die Schmalseite der Abschirmung aus Fig. 4 im Schnitt;
- Fig. 7: die Längsseite der Abschirmung aus Fig. 4 im Schnitt;
- Fig. 8: einen Sender/Empfänger mit einer Abschirmung und einer darin angeordneten Spule im Schrägschnitt;
- Fig. 9: ein beispielhafte Abschirmung, die aus mehreren Bauteilen aufgebaut ist im Schnitt;
- Fig. 10: ein beispielhaftes Energieübertragungssystem bei einem Kraftfahrzeug;
- Fig. 11: das Energieübertragungssystem aus Fig. 10 von unten gesehen in einer ersten Position des Kraftfahrzeugs;
- Fig. 12: wie Fig. 11, jedoch mit übereinander positioniertem Sender und Empfänger und
- Fig. 13: wie Fig. 12, jedoch mit seitlichem Versatz des Senders und Empfängers.

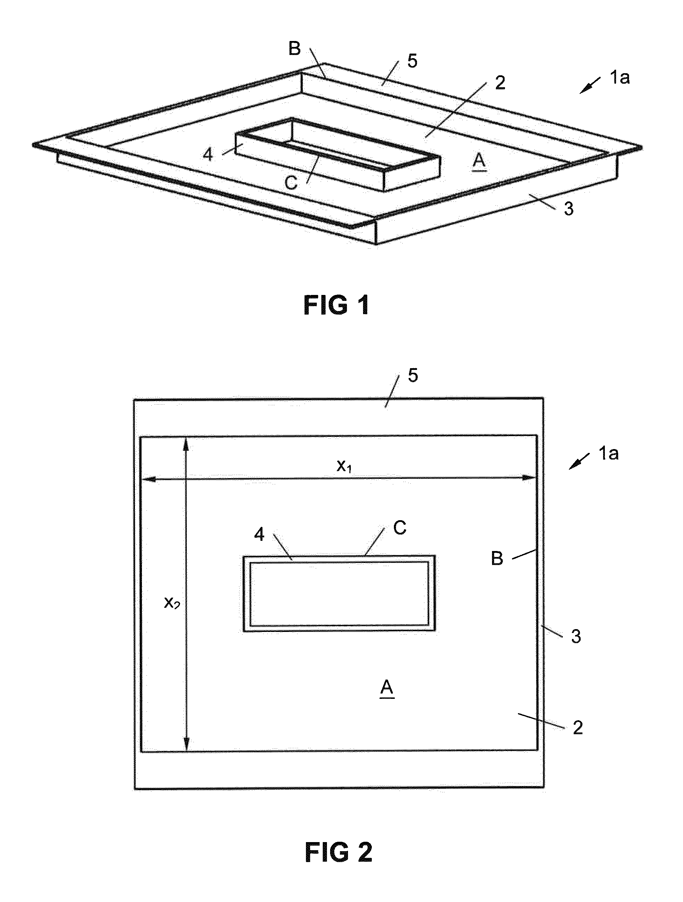

Die Figuren 1 und 2 zeigen ein erstes Beispiel einer wannenförmigen Abschirmung 1 a für eine ringförmige Sendespule/Empfangsspule eines kontaktlosen Energieübertragungssystems, die Fig. 1 in Schrägansicht und die Fig. 2 in Draufsicht. Die Abschirmung 1 a umfasst einen Wannenboden 2, äusserere Wannenwände 3 und innere Wannenwände 4. Die wannenförmige Abschirmung 1 a umschliesst einen Ringbereich A zwischen einem aussenliegenden grösseren Rechteck B und einem innenliegenden, kleineren Rechteck C. Aus dem dargestellten Beispiel geht hervor, dass das grössere Rechteck B mit den äussereren Wannenwänden 3 und das kleinere Rechteck C mit den innere Wannenwänden 4 übereinstimmt. Demzufolge schliessen die äussereren Wannenwände 3 einen äusseren Quader mit dem Rechteck B als Grundfläche und die innere Wannenwände 4 einen inneren Quader mit dem Rechteck C als Grundfläche ein.

Zusätzlich zu den bereits genannten Elementen weist die Abschirmung 1 a im Bereich des aussenliegenden Rechtecks B auf zwei gegenüberliegenden Seiten (und nur auf diesen) flügelartige und insbesondere parallel zum Wannenboden 2 ausgerichtete Fortsätze 5 auf. Generell bestehet die Abschirmung 1 a aus einem Material mit einer magnetischen Leitfähigkeit beziehungsweise Permeabilität von µr≥ 4. Insbesondere ist diese aus Ferrit gefertigt.

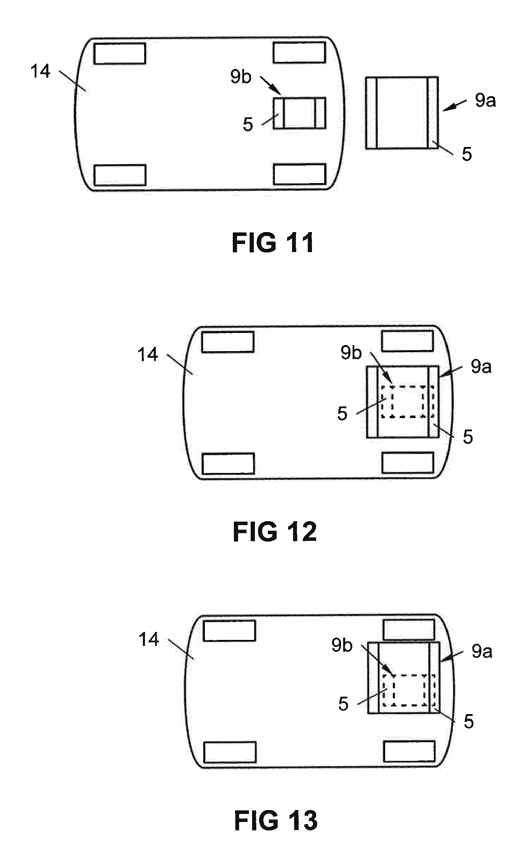

In dem in Fig. 1 und 2 gezeigten Beispiels sind das innenliegende und aussenliegende Rechteck B, C ungleichseitig. Das heisst, eine Seite x₁ des äusseren Rechtecks B ist länger als die andere Seite x₂. Die flügelartigen Fortsätze 5 sind dabei nur auf den längeren Seiten x₁ des aussenliegenden Rechtecks B vorgesehen. Dies ist zwar vorteilhaft aber nicht zwingend. Denkbar ist auch, dass der Ringbereich A zwischen einem aussenliegenden grösseren Quadrat und einem innenliegenden, kleineren Quadrat angeordnet ist. Das heisst, die Seiten x₁ und x₂ sind gleich lang. Insbesondere eignet sich die erste Ausführungsform für eine Sendespule, die zweite für eine Empfangsspule (siehe auch die Figuren 11 bis 13).

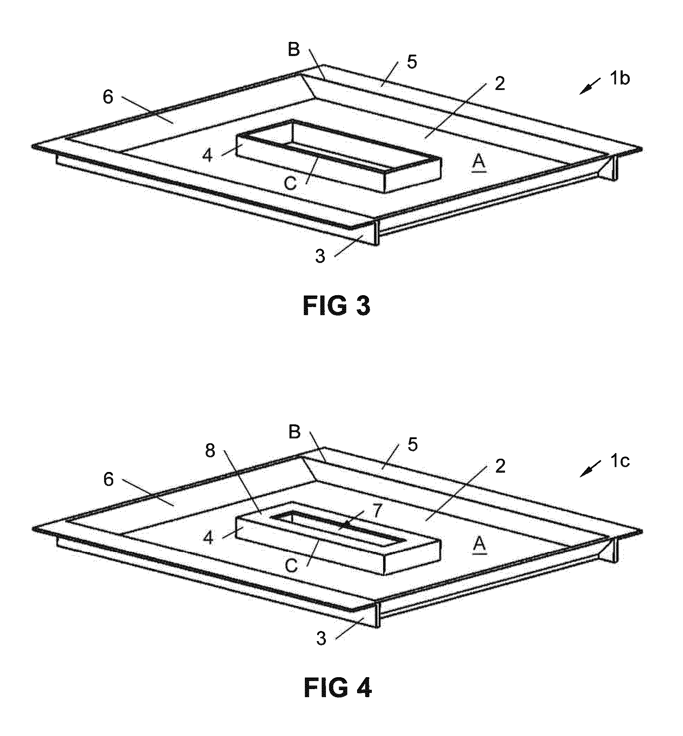

Fig. 3 zeigt nun eine weitere Ausführungsform einer Abschirmung 1 b in Schrägansicht, welcher Abschirmung 1 a nach den Figuren 1 und 2 sehr ähnlich ist. Im Unterschied dazu ist eine Wannenwand 6 der Abschirmung 1 b auf den kürzeren Seiten x₂ des aussenliegenden Rechtecks B nach aussen geneigt. Im Falle einer quadratischen Ausführung sind jene Seiten des aussenliegenden Quadrats, die keine Flügel 5 aufweisen, nach aussen geneigt. Auf diese Weise können die Kopplung beziehungsweise das Streufeld weiter verbessert werden. Bei dem dargestellten Beispiel weist die Abschirmung 1 b nur auf zwei gegenüberliegenden Seiten nach aussen geneigte Wannenwände 6 auf. Denkbar wäre aber auch, dass alle Wannenwände nach aussen geneigt sind.

Fig. 4 zeigt nun ein weiteres Beispiel einer Abschirmung 1 c, welche der in der Fig. 3 dargestellten Abschirmung 1 b sehr ähnlich ist. Im Unterschied dazu ist der Wannenboden 2 im Bereich des inneren Rechtecks C jedoch erhöht, insbesondere auf das Niveau der flügelartigen Fortsätze 5. Zudem weist der erhöhte Wannenboden eine zentrale Ausnehmung 7 auf. Da die zentrale Ausnehmung 7 kleiner ist als das innere Rechteck C, ergeben sich im Bereich des innenliegenden Rechtecks C flügelartige und insbesondere parallel zu den aussenliegenden Flügeln 5 ausgerichtete Fortsätze 8.

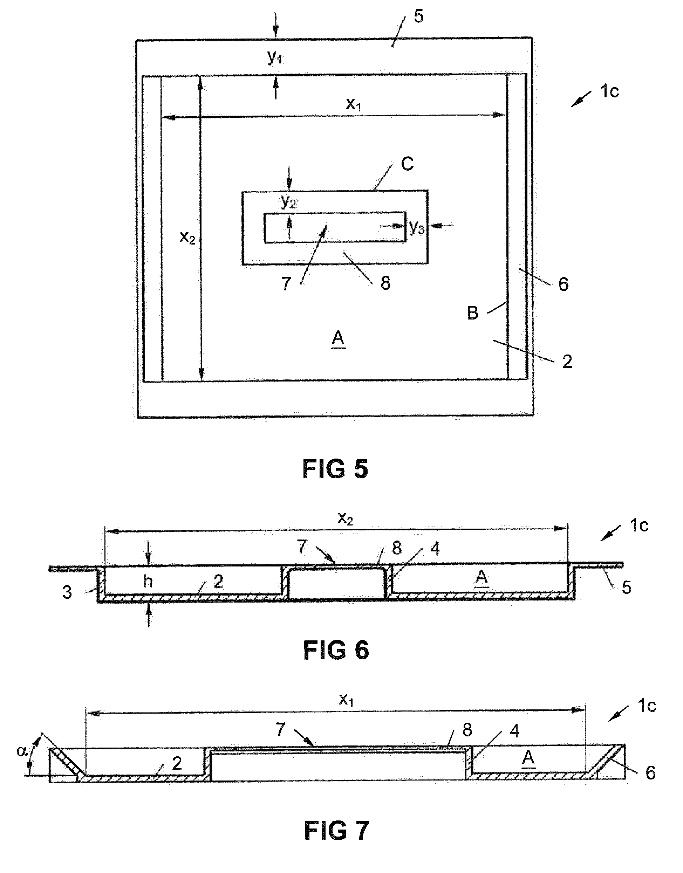

Die Figuren 5 bis 7 zeigen nun weitere Ansichten der Abschirmung 1 c aus Fig. 4. Konkret zeigt die Fig. 5 eine Draufsicht, die Fig.6 die kürzere Seite x₂ im Schnitt und die Fig. 7 die längere Seite x₁ im Schnitt. Zur Verbesserung der Kopplung und des Streufelds einer Sendespule/Empfangsspule werden nun folgende Massnahmen vorgeschlagen.
- Die innenliegenden Flügel 8 kragen gleich weit aus wie die aussenliegenden Flügel 5. Das heisst y₁ = y₂. Insbesondere kragen die innenliegenden Flügel 8 auf der längeren Seite des innenliegenden Rechtecks C gleich weit aus wie die aussenliegenden Flügel 5 auf der längeren Seite x₁ des aussenliegenden Rechtecks B.
- Die innenliegenden Flügel 8 auf der längeren Seite des innenliegenden Rechtecks C kragen weiter zur Mitte hin aus als die innenliegenden Flügel 8 auf der kürzeren Seite des innenliegenden Rechtecks C. Das heisst y2 > y3. Denkbar wäre aber auch, dass die Flügel 8 auf beiden Seiten weit auskragen und y2 = y3 gilt.
- Der Neigungswinkel α zwischen der Wannenwand 6 und der Ebene des aussenliegenden Rechtecks B liegt in einem Bereich von 10° bis 90° und beträgt im Speziellen im Wesentlichen 45°. Diese Massnahme ist auch bei einer Abschirmung 1 b nach der Fig. 3 von Vorteil

Generell ist es von Vorteil, wenn ein Flügel 5, 8 um 10 mm bis 100 mm über eine Wannenwand 3, 4 auskragt. Das heisst, es gilt 10 mm ≤ y₁; y₂; y₃ ≤ 100 mm.

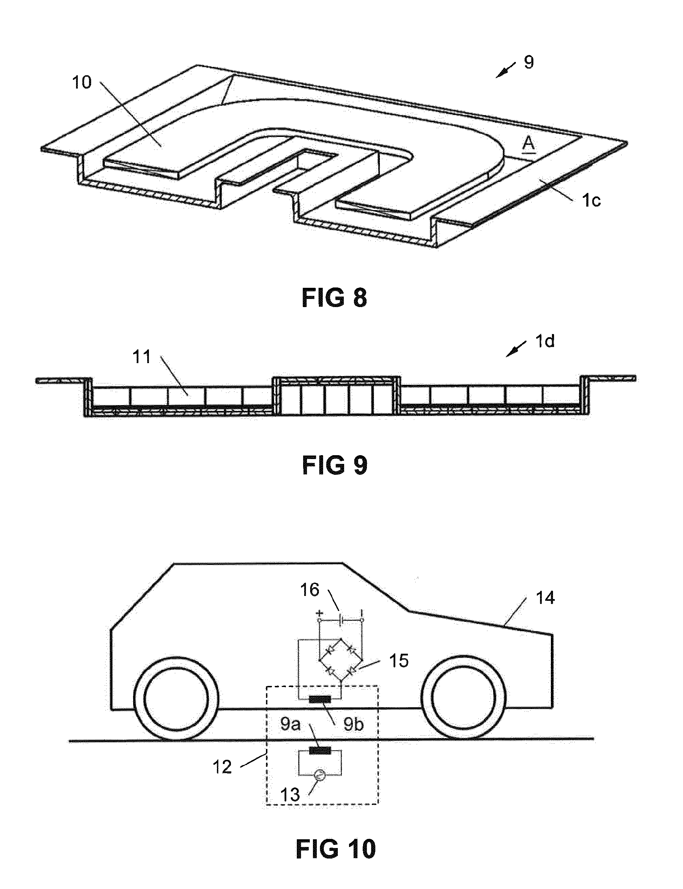

Fig. 8 zeigt nun einen Sender/Empfänger 9 eines Energieübertragungssystems, welcher die Abschirmung 1 c aus den Figuren 4 bis 7 mit einer darin eingebetteten Spule 10 umfasst. Der Sender/Empfänger 9 ist dabei im Schrägschnitt dargestellt. Gut erkennbar ist, dass die Spule 10 im Ringbereich A angeordnet ist, die Abschirmung 1c aber nicht berührt. Der Zwischenraum kann zum Beispiel mit einem Material aufgefüllt sein, dessen elektrische Leitfähigkeit ≤ 10⁻⁴ S/m und dessen magnetische Leitfähigkeit beziehungsweise Permeabilität µr ≤ 2 beträgt. Beispielsweise kann Kunststoff für diesen Zweck eingesetzt werden.

Fig. 9 zeigt nun einen Schnitt durch eine Abschirmung 1d, welche von der äusseren Form her der Abschirmung 1 c gleicht, jedoch aus mehreren Bauteilen 11 (hier Plättchen) aufgebaut ist. Beispielsweise können die einzelnen Plättchen 11 aus Ferrit bestehen. Die Abschirmung 1 d lässt sich aufgrund der Dimensionen (beispielsweise kann eine Abschirmung 1 a..1 d von 200 mm bis inklusive 600 mm breit, 400 mm bis inklusive 800 mm lang und 20 mm bis inklusive 60 mm hoch sein) dadurch unter Umständen leichter aufbauen. Vorteilhaft liegt das Volumen der einzelnen Bauteile 11 jeweils in einem Bereich von 0.5 cm³ bis 200 cm³.

In der Fig. 9 ist nur die Segmentierung der Abschirmung 1 d in einzelne Bauteile 11 als solche dargestellt. Selbstverständlich sollten diese auf eine tragende Struktur aufgebracht sein. Beispielsweise kann ein in den Ringbereich A eingebrachter Kunststoff und/oder unterhalb der Abschirmung 1d vorgesehenes Material als Träger fungieren.

Fig. 10 zeigt nun ein Energieübertragungssystem 12, umfassend einen Sender 9a mit einer daran angeschlossenen Stromversorgung 13 und einem in einem Kraftfahrzeug 14 eingebauten Empfänger 9b. Der Sender 9a und der Empfänger 9b weisen jeweils eine Abschirmung 1 a..1 d mit einer darin angeordneten Spule 10 auf. Aus der Stromversorgung 13 stammende elektrische Energie wird dabei mit Hilfe des Senders 9a an den Empfänger 9b übertragen, dort mit Hilfe des Gleichrichters 15 gleichgerichtet und schliesslich für die Ladung eines in dem Kraftfahrzeug 14 angeordneten Akkumulators 16 eingesetzt. Auf die gezeigte Weise kann also eine Elektrofahrzeug 14 kontaktlos aufgeladen werden.

Die Figuren 11 bis 13 zeigen die Anordnung aus Fig. 10 nun von unten. In der Fig. 11 ist das Kraftfahrzeug 14 noch nicht über den Sender 9a positioniert und muss zum Laden noch etwas nach vorne fahren. In der Fig. 12 ist das Fahrzeug 14 so abgestellt, dass der Sender 9a und der Empfänger 9b fast exakt ausgerichtet sind. In der Fig. 13 sind der Sender 9a und der Empfänger 9b dagegen etwas seitlich versetzt.

Die vorgeschlagenen Massnahmen gewährleisten sowohl im Fall der Fig. 12 als auch im Fall der Fig. 13 gute Kopplung zwischen Sender 9a und Empfänger 9b und sorgen für ein nur geringes vom Sender 9a ausgehendes Streufeld. Auf diese Weise wird nicht nur die Effizienz des Ladevorgangs gesteigert, sondern es wird auch eine eventuelle gesundheitliche Beeinträchtigung von Menschen und Tieren vermindert/verhindert, welche sich im Bereich des Fahrzeugs 14 aufhalten.

Besonders vorteilhaft ist es dabei, wenn die aussenliegenden Flügel 5 des Senders 9a und die aussenliegenden Flügel 5 des Empfängers 9b im Betrieb im Wesentlichen parallel zueinander ausgerichtet sind, so wie dies in den Figuren 12 und 13 dargestellt ist. Vorteilhaft ist es weiterhin, wenn die Längsseiten der Flügel 5 des Empfängers 9b, wie in den Figuren 12 und 13 dargestellt, quer zur Fahrtrichtung des Kraftfahrzeugs 14 ausgerichtet sind.

Die Abschirmungen 1a..1d sind beim Laden jeweils aussenliegend angeordnet, und die Spulen 10 sind einander zugewandt. Das heisst die Abschirmung 1a..1d des Senders 9a befindet sich in der in den Figuren 1 bis 9 dargestellten Lage, die Abschirmung 1 a..1 d des Empfängers 9b ist dagegen kopfüber angeordnet. Mit anderen Worten befindet sich eine Abschirmung 1 a..1 d des Senders 9a in der Fig. 10 unterhalb einer Sendespule 10, die Abschirmung 1 a..1 d des Empfängers 9b oberhalb einer Empfangsspule 10.

Vorteilhaft ist es auch, wenn der Ringbereich A des Empfängers 9b in einem aussenliegenden Quadrat B angeordnet ist und der Ringbereich A des Senders 9a in einem aussenliegenden, ungleichmässigen Rechteck B. Dies ist in den Figuren 11 bis 13 ebenfalls der Fall.

Generell können für die Anordnungen nach den Figuren 10 bis 13 beliebige Sendespulen 1 a..1 d respektive Kombinationen der dargestellten Ausführungsformen eingesetzt werden. Durch die vorgeschlagenen Massnahmen entstehen vorteilhaft nur geringe Streufelder im Bereich des Fahrzeugs 14, und die Energieübertragung erfolgt mit nur geringen Verlusten.

An dieser Stelle wird auch angemerkt, dass sich die vorgeschlagenen Massnahmen beliebig kombinieren lassen. Beispielsweise kann die Abschirmung der Fig. 1 auch innenliegenden Flügel 8 aufweisen, so wie dies beispielsweise bei der Abschirmung 1 c der Fig. 4 der Fall ist.

Abschliessend wird auch angemerkt, dass die dargestellten Anordnungen in der Realität auch mehr Bauteile als dargestellt umfassen können und unter Umständen verzerrt dargestellt sind. Weiterhin wird angemerkt, dass sich die obigen Ausgestaltungen und Weiterbildungen der Erfindung auf beliebige Art und Weise kombinieren lassen.

### Bezugszeichenliste

- 1a..1d: Abschirmung
- 2: Wannenboden
- 3: äussere Wannenwand
- 4: innere Wannenwand
- 5: flügelartiger Fortsatz (aussen)
- 6: geneigte Wannenwand
- 7: zentrale Ausnehmung
- 8: flügelartiger Fortsatz (innen)
- 9, 9a, 9b: Sender/Empfänger
- 10: Spule
- 11: (Ferrit)bauteil
- 12: Energieübertragungssystem
- 13: Stromquelle
- 14: Kraftfahrzeug
- 15: Gleichrichter
- 16: Akkumulator
- A: Ringbereich
- B: äussereres Rechteck
- C: inneres Rechteck
- y₁: Breite aussenliegender Flügel
- y₂, y₃: Breite innenliegender Flügel
- α: Neigung Seitenwand
- h: Höhe Abschirmung/Wanne
- x₁: Länge äussereres Rechteck
- x₂: Breite äussereres Rechteck

## Patentansprüche

1. Abschirmung (1a..1d) aus einem Material mit einer magnetischen Leitfähigkeit beziehungsweise Permeabilität von µr≥ 4 für eine ringförmige Sendespule/Empfangsspule (10) eines kontaktlosen Energieübertragungssystems (12), wobei die Abschirmung (1a..1d) einen Ringbereich (A) zwischen einem aussenliegenden grösseren Rechteck (B) und einem innenliegenden, kleineren Rechteck (C) wannenförmig einschliesst,
**dadurch gekennzeichnet, dass**
die Abschirmung (1 a..1 d) im Bereich des aussenliegenden Rechtecks (B) nur auf zwei gegenüberliegenden Seiten flügelartige Fortsätze (5) aufweist.

2. Abschirmung (1 a..1 d) nach Anspruch 1, **dadurch gekennzeichnet, dass** der Ringbereich (A) zwischen einem aussenliegenden grösseren Quadrat (B) und einem innenliegenden, kleineren Quadrat (C) angeordnet ist.

3. Abschirmung (1a..1d) nach Anspruch 1, **dadurch gekennzeichnet, dass** das innenliegende und aussenliegende Rechteck (B, C) ungleichseitig sind und dass die flügelartigen Fortsätze (5) nur auf den längeren Seiten (x₁) des aussenliegenden Rechtecks (B) vorgesehen sind.

4. Abschirmung (1a..1d) nach Anspruch 2 oder 3, **dadurch gekennzeichnet, dass** eine Wannenwand (6) der Abschirmung (1a..1d) auf jenen Seiten des aussenliegenden Quadrats (B), die keine Flügel (5) aufweisen, beziehungsweise auf den kürzeren Seiten (x₂) des aussenliegenden Rechtecks (B) nach aussen geneigt ist.

5. Abschirmung (1 a..1 d) nach Anspruch 4, **dadurch gekennzeichnet, dass** eine Wannenwand (6) der Abschirmung (1a..1d) nur auf jenen Seiten des aussenliegenden Quadrats (B), die keine Flügel (5) aufweisen, beziehungsweise nur auf den kürzeren Seiten (x₂) des aussenliegenden Rechtecks (B) nach aussen geneigt ist.

6. Abschirmung (1 a..1 d) nach Anspruch 4 oder 5, **dadurch gekennzeichnet, dass** der Neigungswinkel (α) zwischen der Wannenwand (6) und der Ebene des aussenliegenden Rechtecks (B) in einem Bereich von 10° bis 90° liegt und im Speziellen im Wesentlichen 45° beträgt.

7. Abschirmung (1a..1d) nach einem der Ansprüche 1 bis 6, **dadurch gekennzeichnet, dass** der Wannenboden (2) im Bereich des inneren Rechtecks (C) erhöht ist.

8. Abschirmung (1a..1d) nach Anspruch 7, **dadurch gekennzeichnet, dass** der erhöhte Wannenboden eine zentrale Ausnehmung (7) aufweist.

9. Abschirmung (1a..1d) nach Anspruch 8, **dadurch gekennzeichnet, dass** die zentrale Ausnehmung (7) kleiner ist als das innere Rechteck (C) und die Abschirmung (1a..1d) im Bereich des innenliegenden Rechtecks (C) flügelartige Fortsätze (8) aufweist.

10. Abschirmung (1a..1d) nach Anspruch 9, **dadurch gekennzeichnet, dass** die innenliegenden Flügel (8) auf der längeren Seite des innenliegenden Rechtecks (C) gleich weit zur Mitte auskragen wie die innenliegenden Flügel (8) auf der kürzeren Seite des innenliegenden Rechtecks (C).

11. Abschirmung (1a..1d) nach Anspruch 9, **dadurch gekennzeichnet, dass** die innenliegenden Flügel (8) auf der längeren Seite des innenliegenden Rechtecks (C) weiter zur Mitte hin auskragen wie die innenliegenden Flügel (8) auf der kürzeren Seite des innenliegenden Rechtecks (C).

12. Abschirmung (1 a..1 d) nach einem der Ansprüche 9 bis 11, **dadurch gekennzeichnet, dass** die innenliegenden Flügel (8) gleich weit auskragen wie die aussenliegenden Flügel (5).

13. Abschirmung (1a..1d) nach einem der Ansprüche 1 bis 12, **dadurch gekennzeichnet, dass** ein Flügel (5, 8) um 10 mm bis 100 mm über eine Wannenwand (3, 4) auskragt.

14. Abschirmung (1 a..1 d) nach einem der Ansprüche 1 bis 13, **dadurch gekennzeichnet, dass** diese aus mehreren Bauteilen (11) zusammengesetzt ist, deren Volumen jeweils in einem Bereich von 0.5 cm³ bis 200 cm³ liegt.

15. Sender/Empfänger (9, 9a, 9b) eines Energieübertragungssystems (12), umfassend eine Abschirmung (1 a..1 d) nach einem der Ansprüche 1 bis 14, **gekennzeichnet durch** eine im Ringbereich (A) angeordnete Spule (10).

16. Energieübertragungssystem (12), **gekennzeichnet durch** einen Sender (9a) nach Anspruch 15 sowie einen in einem Kraftfahrzeug (14) eingebauten Empfänger (9b) nach Anspruch 15.

17. Energieübertragungssystem (12), **gekennzeichnet durch** einen Sender (9a) nach Anspruch 15 und einer Abschirmung (1a..1d) nach den Ansprüchen 3 bis 14 sowie einem in einem Kraftfahrzeug (14) eingebauten Empfänger (9b) nach Anspruch 15 und einer Abschirmung (1a..1d) nach Anspruch 2, insbesondere in Kombination mit einem der Ansprüche 4 bis 14.

18. Energieübertragungssystem (12) nach Anspruch 16 oder 17, **dadurch gekennzeichnet, dass** die aussenliegenden Flügel (5) des Senders (9a) und die aussenliegenden Flügel (5) des Empfängers (9b) im Betrieb im Wesentlichen parallel zueinander ausgerichtet sind.

19. Energieübertragungssystem (12) nach Anspruch 18, **dadurch gekennzeichnet, dass** die Längsseite der Flügel (5) des Empfängers (9b) quer zur Fahrtrichtung des Kraftfahrzeugs (14) ausgerichtet sind.

20. Verwendung einer Abschirmung (1 a..1 d) nach einem der Ansprüche 1 bis 14 oder eines Senders/Empfängers (9, 9a, 9b) nach Anspruch 15 zur Ladung eines in einem Kraftfahrzeug (14) angeordneten Akkumulators (16).
